# EUROPEAN PATENT SPECIFICATION

(11) **EP 2 161 436 B1**
(45) Date of publication and mention of the grant of the patent: **31.08.2011**
(21) Application number: 09166806.1
(22) Date of filing: 30.07.2009
(51) Int. Cl.: F02D 41/00, F02D 41/14, F02D 41/02

(54) **Internal combustion engine with supercharger controller and exhaust choke valve controller**
Verbrennungsmotor mit Ladersteuerung und Abgasdrosselventilsteuerung
Moteur à combustion interne doté d'un contrôleur surpresseur et contrôleur de clapet restricteur d'échappement

(30) Priority: 01.08.2008 JP 2008199299
(43) Date of publication of application: 10.03.2010
(73) Proprietor: Honda Motor Co., Ltd., Tokyo 107-8556 (JP)
(72) Inventor: Haga, Hisao, Saitama 351-0193 (JP); Umeda, Tadashi, Saitama 351-0193 (JP); TAJIRI, Kenichi, Saitama 351-0193 (JP)
(74) Representative: Trossin, Hans-Jürgen

(56) References cited:
- EP-A- 0 454 943
- EP-A- 1 375 868
- EP-A- 1 882 840
- DE-A1- 10 335 828
- DE-C1- 3 540 013
- JP-A- 2008 063 987

## Description

The present invention relates to an internal combustion engine provided with a supercharger controller for controlling a boost controller for controlling a boost control member, and an exhaust choke valve controller for controlling an exhaust choke valve for regulating the temperature of an exhaust emission control device.

An internal combustion engine disclosed in, for example, JP 2817852 B is provided with an exhaust emission control device and an exhaust choke valve which are placed in an exhaust passage. The temperature of the exhaust gas is raised when the pressure of the exhaust gas is increased by reducing the opening of the exhaust choke valve to thus raise the temperature of the exhaust emission control device rapidly to an activation temperature.

An internal combustion engine disclosed in, for example, JP 2008-63987 A, on which the preamble of claim 1 is based, is provided with a supercharger that pressurizes intake air by the kinetic energy of the exhaust gas, an exhaust emission control device and an exhaust choke valve. The exhaust emission control device and the exhaust choke valve are placed in an exhaust passage. If the back pressure increases beyond a predetermined pressure when the opening of the exhaust choke valve is reduced, the boost pressure is reduced to suppress an excessive increase of the pumping loss of the internal combustion engine.

When the opening of the exhaust choke valve is reduced to raise the temperature of the exhaust emission control device rapidly to the activation temperature, the exhaust emission control device is heated at an elevated heating rate, while the kinetic energy of the exhaust gas to be used by the supercharger that uses the kinetic energy of the exhaust gas for supercharging decreases. For this reason, it is difficult for the supercharger to produce a desired target boost pressure, the pumping loss of the internal combustion engine augments, the fuel consumption and the output performance of the internal combustion engine drop.

If the boost pressure is reduced to suppress the increase of the pumping loss of the engine, the transitional response performance, such as the acceleration performance, of the engine deteriorates so that the operational performance deteriorates.

The present invention has been made in view of such problems and it is therefore an object of the present invention to control the opening of an exhaust choke valve included in an internal combustion engine provided with a supercharger and an exhaust emission control device to raise the temperature of the exhaust emission control device rapidly to a desired target temperature and to achieve high operational performance by ensuring a high boost pressure.

The invention further aims at cause the exhaust choke valve to increase the boost pressure by increasing the opening of the exhaust choke valve beyond a temperature-regulating opening to suppress heating effect resulting from the decrease of the opening of the exhaust choke valve by increasing the boost pressure through the control of the exhaust choke valve and to stabilize the exhaust emission control device at a desired target temperature.

The present invention provides an internal combustion engine in accordace with claim 1.

According to the present invention, the opening of the exhaust choke valve is adjusted to the temperature-regulating opening smaller than the reference opening when the exhaust emission control device is at a temperature below the target temperature to promote heating the exhaust emission control device. Consequently, the exhaust emission control device can be heated rapidly to the target temperature, namely, the activation temperature or the regeneration temperature and the efficiency of a regenerating process for regenerating the exhaust purifying ability of the exhaust emission control device can be thus improved. Since the boost pressure can be raised by the boost control member, a target boost pressure can be achieved by the boost control member. Thus the target boost pressure can be achieved to improve the operating performance of the internal combustion engine.

According to the present invention, the exhaust choke valve controller can increase the opening of the exhaust choke valve to a pressure-regulating opening larger than the temperature-regulating opening when the actual temperature is lower than the target temperature, the actual boost pressure is lower than the target boost pressure, the pressure difference is greater than a permissible pressure difference and the actual operating condition corresponds to the critical operating condition.

Thus, the operating performance of the internal combustion engine can be improved because the boost pressure can be increased toward the target boost pressure by increasing the kinetic energy of the exhaust gas due to the increasing of the opening of the exhaust choke valve when the actual boost pressure is lower than the target boost pressure by a pressure difference greater than the permissible pressure difference and the boost pressure cannot be increased by controlling the boost control members because the boost control member of the supercharger is at a critical operating position.

In the foregoing control mode, the pressure-regulating opening is smaller than the reference opening.

Since the pressure-regulating opening of the exhaust choke valve is smaller than the reference opening, it is possible to suppress the deterioration of the promotion of heating the exhaust emission control device due to the control of the exhaust choke valve. Thus, the exhaust emission control device can be rapidly heated to the target temperature while satisfactory operating performance is ensured by raising the boosting pressure.

In a preferred mode of the present invention, the exhaust choke valve controller includes a pressure-regulating opening setting means for setting the pressure-regulating opening by adding an opening increment calculated on the basis of the pressure difference to the temperature-regulating opening, and the opening increment is smaller when the temperature-regulating opening is smaller for the same pressure difference.

Since the opening increment-to be added to the temperature-regulating opening is smaller when the temperature-regulating opening is smaller, the degree of suppressing heating the exhaust emission control device is lower when the degree of need for heating the exhaust emission control device is higher. Thus, the exhaust emission control device can be rapidly heated to the target temperature while satisfactory operating performance is ensured by raising the boost pressure.

In a preferred mode of the present invention, the exhaust choke valve controller adjusts the opening of the exhaust choke valve to the temperature-regulating opening when the actual boost pressure is higher than the target boost pressure.

Since preference is thus given to heating the exhaust emission control device when the actual boost pressure increases beyond the target boost pressure, the exhaust emission control device can be still more rapidly heated at the target temperature.

When the actual boost pressure is lower than the target boost pressure, the pressure difference is greater than the permissible pressure difference and the actual boost pressure is lower than the target boost pressure, the supercharger controller controls the operating condition of the boost control member according to the pressure difference and the exhaust choke valve controller can adjust the opening of the exhaust choke valve to the temperature-regulating opening.

Since the boost control members can be thus controlled such that the boost pressure approaches the target boost pressure when the actual boost pressure is lower than the target boost pressure and the boost control member is at a critical operating position, satisfactory operating performance can be ensured. The exhaust emission control device can be rapidly heated to the target temperature by adjusting the opening of the exhaust choke valve to the temperature-regulating opening.

Preferably, the temperature-regulating opening setting means sets the temperature-regulating opening on the basis of the temperature difference, and an exhaust gas flow rate measured by an exhaust gas flow rate measuring means for measuring the flow rate of the exhaust gas in the exhaust passage.

Since the temperature-regulating opening of the exhaust choke valve is thus controlled on the basis of the temperature difference and the exhaust gas flow rate measured by the exhaust gas flow rate measuring means, the exhaust emission control device can be rapidly heated to the target temperature, the temperature of the exhaust emission control device can be restrained from overshooting the target temperature and the exhaust emission can be stabilized at the target temperature. Consequently, exhaust emission control ability and the efficiency of regenerating process can be improved and the excessive rise of the temperature of the exhaust emission control device can be avoided to improve the durability of the exhaust emission control device.

Preferred embodiments of the present invention will be described with reference to the accompanying drawings in which:
Fig. 1 is a schematic view of an internal combustion engine in a preferred embodiment of the present invention;
Fig. 2 is a block diagram of an operation controller included in the internal combustion engine shown in Fig. 1;
Fig. 3 is a graph explaining a map to be used by a temperature-regulating opening calculator included in the operation controller shown in Fig. 2 for calculating a temperature increment;
Fig. 4 is a graph of explaining a map to be used by the temperature-regulating opening calculator included in the operation controller shown in Fig. 2 for calculating a temperature decrement;
Fig. 5 is a graph explaining a map to be used by the temperature-regulating opening calculator included in the operation controller shown in Fig. 2 for calculating a percentage opening area of an exhaust choke valve;
Fig. 6 is a graph explaining a map to be used by a pressure-regulating opening setting unit included in the operation controller shown in Fig. 2 for calculating an opening increment for the exhaust choke valve;
Fig. 7 is a flow chart explaining a temperature-regulating opening setting procedure to be carried out by the temperature-regulating opening setting unit included in the operation controller shown in Fig. 2 for setting a temperature-regulating opening for the exhaust choke valve and the function of the temperature-regulating opening setting unit;
Fig. 8 is a flow chart explaining a control procedure to be carried out by a supercharger controller and an exhaust choke valve controller included in the operation controller shown in Fig. 2 and the function of the a supercharger controller and the exhaust choke valve controller; and
Fig. 9 is a graph explaining the variation of the opening of the exhaust choke valve caused by the exhaust choke valve controller included in the operation controller shown in Fig. 2 and the variation of the temperature of a catalytic converter.

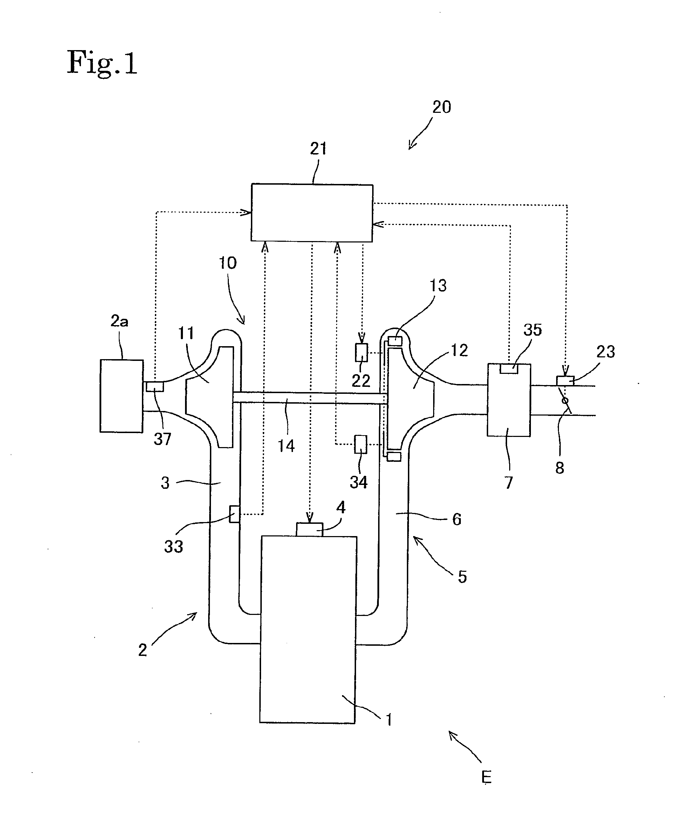

Referring to Fig. 1, an internal combustion engine E in a preferred embodiment of the present invention is an diesel engine with at least a cylinder, typically a multiple-cylinder diesel engine to be mounted on a vehicle.

The internal combustion engine E includes an engine body 1 provided with pistons which are driven by the pressure of combustion gas produced in combustion chambers to drive a crankshaft for rotation, an intake system 2 provided with an air cleaner 2a through which air is taken in and forming an air passage 3 along which intake air flows into the combustion chambers, an exhaust turbocharger 10, namely, a supercharger, for pressurizing intake air flowing through the air cleaner 2a, fuel injection valves 4 each for injecting fuel into the intake air filling the combustion chamber to produce an air-fuel mixture, and an exhaust system 5 having an exhaust passage 6 through which exhaust gas produced by burning the air-fuel mixture in the combustion chambers flows to the outside of the internal combustion engine E.

The exhaust system 5 includes a lean-NOₓ catalytic converter 7, namely, an exhaust emission control device for purifying the exhaust gas, placed in the exhaust passage 6, and an exhaust choke valve 8 for regulating the flow of the exhaust gas flowing in the exhaust passage 6. The exhaust choke valve 8 is a butterfly valve provided with a turnable disk element. The exhaust choke valve 8 is disposed on the downstream side of the catalytic converter 7 with respect to the flowing direction of the exhaust gas in the exhaust passage 6. For example, the catalytic converter 7 is a catalytic converter provided with a substrate carrying platinum or the like, or a selective-reduction catalytic converter provided with a substrate made of a metal carbide or a metal nitride and carrying iridium and an alkaline earth metal.

The exhaust turbocharger 10 includes a compressor 11 for pressurizing the intake air, a turbine 12, namely, an exhaust-driven member, driven by the exhaust gas to drive the compressor 11, and variable vanes 13, namely, boost control members for regulating the boost pressure of the intake air pressurized by the compressor 11 by regulating the flow of the exhaust gas. The compressor 11 is disposed on the downstream side of the air cleaner 21 in the intake passage 3. The turbine 12 is disposed on the upstream side of the catalytic converter 7 and the exhaust choke valve 8 with respect to the flowing direction of the exhaust gas in the exhaust passage 6.

The compressor 11 is rotationally driven by a drive shaft 14 fixedly combined with the turbine 12 driven for rotation by the kinetic energy of the exhaust gas. The compressor 11 is an intake air pressurizing device that pressurizes the intake air by the kinetic energy of the exhaust gas.

The variable vanes 13 are turnable vanes disposed so as to be turnable in an inlet passage through which the exhaust gas flows into the turbine 12 in the exhaust passage 6. The variable vanes 13 can be turned so as to change the passage area of the inlet passage to change the velocity of the exhaust gas flowing into the turbine 12. The variable vanes 13 can be turned in a predetermined range between a minimum-opening vane position, namely, a lower-limit-pressure position, and a maximum-opening vane position, namely, an upper-limit-pressure position. The velocity of the exhaust gas increases and the boost pressure increases when the variable vanes 13 are turned toward the minimum-opening vane position. The velocity of the exhaust gas decreases and the boost pressure decreases when the variable vanes 13 are turned toward the maximum-opening vane position. Thus, the opening of the variable vanes 13 is variable.

In a state where the variable vanes 13 are at the minimum-opening vane position, namely, the lower-limit-pressure position, the inlet passage has a minimum passage area and the boost pressure increases. In a state where the variable vanes 13 are at the maximum-opening vane position, namely, the upper-limit-pressure position, the inlet passage has a maximum passage area and the boost pressure reduces.

The internal combustion engine E has an operation controller 20 for controlling the operation of the engine E, an actuator 22, namely, a variable vane driving means for turning the variable vanes 13 to change the position of the variable vanes 13, and an actuator 23, namely, an exhaust choke valve operating means for operating the exhaust choke valve 8 to change the opening of the exhaust choke valve 8.

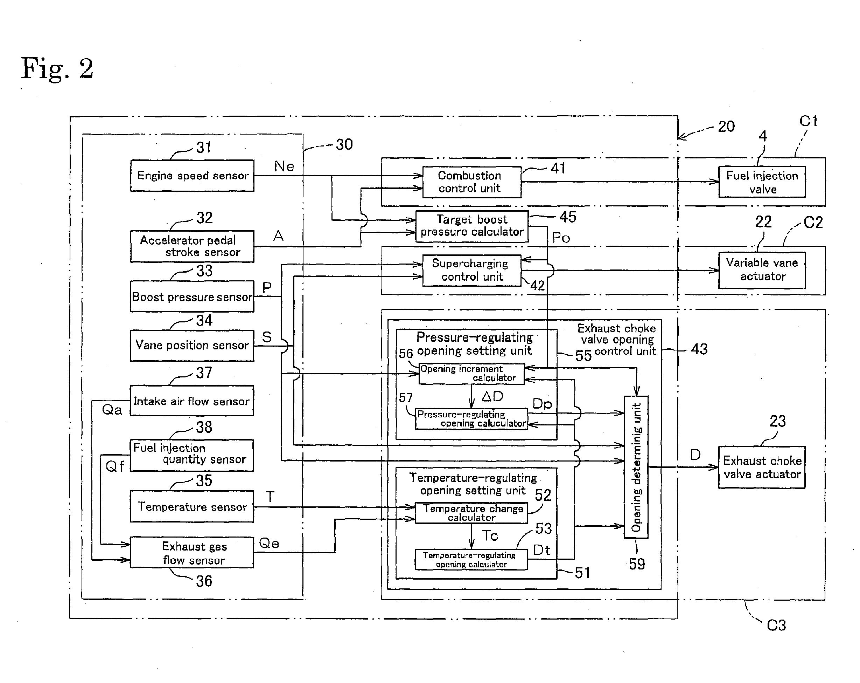

Referring to Figs. 1 and 2, the operation controller 20 includes a monitoring unit 30 for monitoring conditions of the internal combustion engine E including the engine operating condition, an electronic control unit (ECU) 21 for controlling the fuel injection valves 4 and the actuators 22 and 23 according to the conditions of the internal combustion engine E represented by measured data provided by the monitoring unit 30.

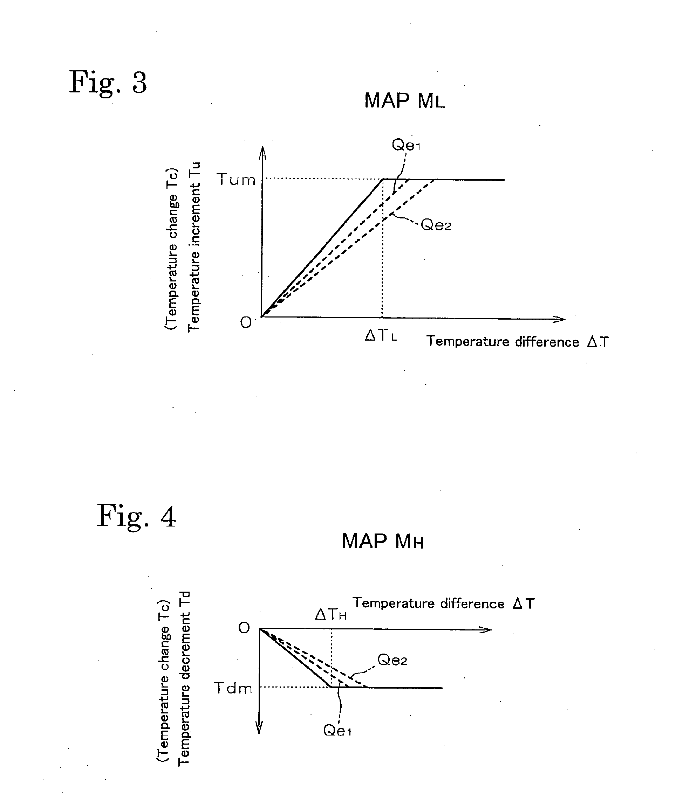

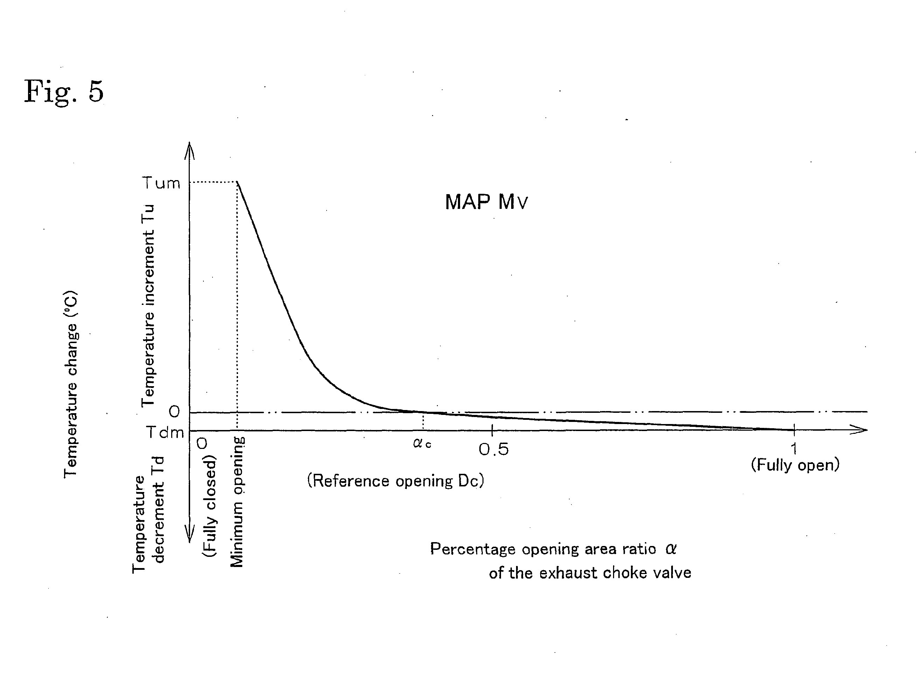

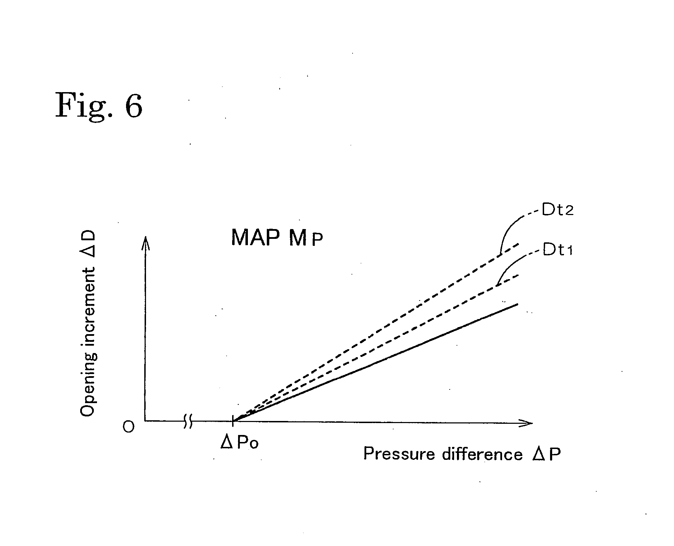

The ECU 21 is a computer including an I/O interface, a central processing unit and a storage device storing control programs and maps. The maps include a map M_{L} (Fig. 3), a map M_{H} (Fig. 4), a map Mᵥ (Fig. 5) and a map Mp (Fig. 6).

The ECU 21 includes a combustion control unit 41, a supercharging control unit 42 and an exhaust choke valve opening control unit 43 respectively for controlling the fuel injection valves 4, the variable vanes 13 and the exhaust choke valve 8 on the basis of data indicating the conditions of the internal combustion engine E provided by the monitoring unit 30.

The combustion control unit 41 and the fuel injection valves 4 form a combustion controller C1 that controls the mode of operation of the internal combustion engine E according to the conditions of the internal combustion engine E. The supercharging control unit 42 and the actuator 22 form a supercharger controller C2 that determines the position of the variable vanes 13 according to the conditions of the internal combustion engine E. The exhaust choke valve opening control unit 43 and the actuator 23 form an exhaust choke valve controller C3 that determines the opening of the exhaust choke valve 8 according to the conditions of the internal combustion engine E.

The monitoring unit 30 includes an engine speed sensor 31 for measuring the engine speed Ne of the internal combustion engine E, an accelerator pedal stroke sensor 32 for measuring accelerator pedal stroke A, a boost pressure sensor 33 that measures the actual boost pressure P of the intake air at a position on the downstream side of the compressor 11 in the intake passage 3, a vane position sensor 34 that determines the actual operating position of the variable vanes 13, a converter temperature sensor 35 that measures the actual temperature T of the catalytic converter 7, an exhaust gas flow sensor 36 that measures the exhaust gas flow rate Qe of the exhaust gas in the exhaust passage 6, an intake air flow sensor 37 that measures the intake air flow rate Qa in the intake passage 3, and a fuel injection quantity sensor 38 that measures a fuel injection quantity Qf injected into the intake air by each fuel injection valve 4.

Functions of a part or all of the sensors 31 to 38, and those of the control units 41 to 43 are included in the functions of the ECU 21.

The temperature of the catalytic converter 7 is represented by the temperature of the catalyst of the catalytic converter 7, the temperature of the substrate carrying the catalyst or the temperature of the exhaust gas as a indicator of the temperature of the catalyst or the substrate.

The exhaust gas flow sensor 36 calculates the exhaust gas flow rate Qe from the intake air flow rate Qa measured by the intake air flow sensor 37 and the fuel injection quantity Qf measured by the fuel injection quantity sensor 38.

The combustion control unit 41 determines the fuel injection quantity Qf to be injected by each fuel injection valve 4 and injection timing on the basis of the engine speed Ne and the accelerator pedal stoke A. The combustion controller C1 controls the fuel injection valves 4 such that the injection fuel quantity Qf of the fuel determined on the basis of the engine speed Ne and the accelerator pedal stroke A is injected at a time determined on the basis of the engine speed Ne and the acceleration stroke A.

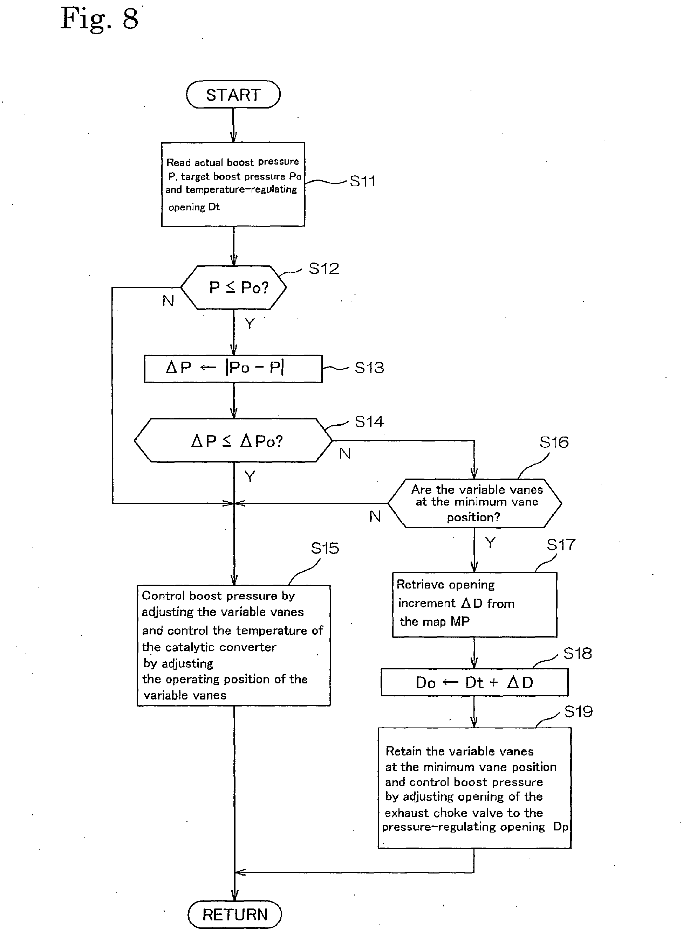

The supercharging control unit 42 of the supercharger controller C2 controls the actuator 22 to adjust the operating position of the variable vanes 13 according to the actual boost pressure P, a pressure difference ΔP (Fig. 8) equal to the absolute value of the difference between the actual boost pressure P and a target boost pressure Po and the actual position S of the variable vanes 13. Thus, the supercharger controller C2 executes a feedback control operation to adjust the actual boost pressure P to the target boost pressure Po. In the following description, the boost pressure control operation of the supercharger controller C2 will be called "supercharger boost pressure control operation".

The target boost pressure Po is calculated by a target boost pressure calculator 45 included in the ECU 21 on the basis of the engine speed N3 and the accelerator pedal stroke A included in the conditions of the internal combustion engine E.

In the supercharger boost pressure control operation, the supercharger controller C2 moves the variable vanes 13 toward the minimum-opening vane position to increase the actual boost pressure P so as to coincide with the target boost pressure Po when the actual boost pressure P is lower than the target boost pressure Po. The supercharger controller C2 moves the variable vanes 13 toward the maximum-opening vane position to decrease the actual boost pressure P so as to coincide with the target boost pressure Po when the actual boost pressure P is higher than the target boost pressure Po. The supercharger controller C2 does not move the variable vanes 13 and retains the variable vanes 13 at the present operating position when the actual boost pressure P is equal to the target boost pressure Po.

The supercharger controller C2 retains the variable vanes 13 at the present operating position when the pressure difference ΔP is larger than a permissible pressure difference ΔPo and the actual operating position S of the variable vanes 13 is equal to the minimum-opening vane position.

The permissible pressure difference ΔPo is determined to suppress the variation of the output of the internal combustion engine E resulting from the variation of the boost pressure.

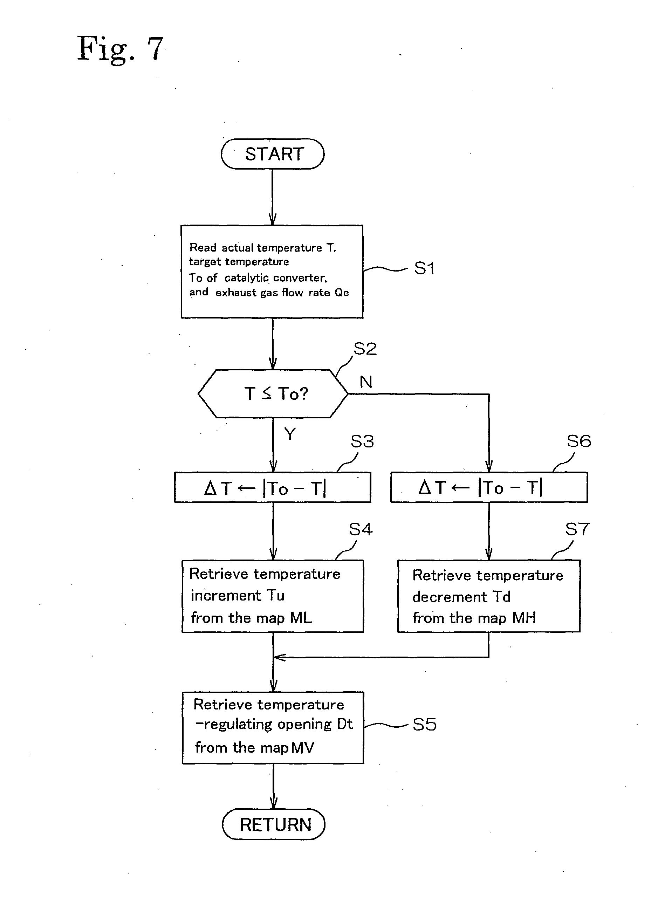

The exhaust choke valve controller C3 includes an opening determining unit 59 for determining the opening of the exhaust choke valve 8. In the exhaust choke valve controller C3, the opening determining unit 59 determines the opening of the exhaust choke valve 8 on the basis of the actual temperature T of the catalytic converter 7, the temperature difference AT (Fig. 7) between the actual temperature T and the target temperature To, the exhaust gas flow rate Qe, and on the basis of the actual boost pressure P, the pressure difference ΔP equal to the absolute value of the difference between the actual boost pressure P and the target boost pressure Po and the actual operating position of the variable vanes 13. The actuator 23 adjusts the opening of the exhaust choke valve 8 to the thus determined opening.

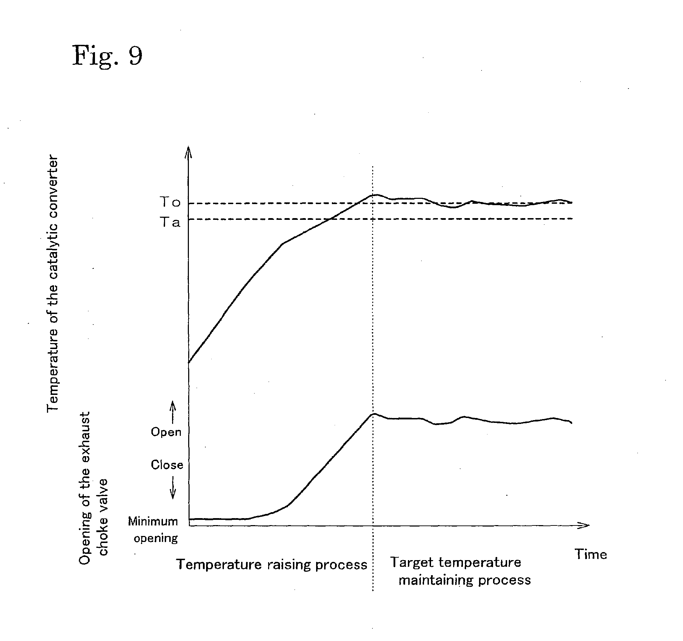

The temperature difference AT is the absolute value (Fig. 7) of the difference between the actual temperature T of the catalytic converter 7 and the target temperature To (Fig. 9) at which the catalytic converter 7 is activated. The predetermined target temperature To is higher by a predetermined temperature increment than an activation temperature Ta (Fig. 9) at which the catalytic converter 7 is activated. The activation temperature Ta is a minimum temperature at which the catalytic converter 7 becomes an activated state. Thus, the catalytic converter 7 is in an activated state at the activation temperature Ta and the target temperature To. The predetermined temperature increment is determined to prevent drop of the temperature of the catalytic converter 7 below the activation temperature Ta due to variation of the temperature of the exhaust gas and to ensure satisfactory purification performance such that the catalytic converter 7 is at a temperature at which a maximum purification ratio is achieved.

The exhaust choke valve opening control unit 43 includes a temperature-regulating opening setting unit 51 for setting a temperature-regulating opening Dt for the exhaust choke valve 8 on the basis of the actual temperature T, the temperature difference AT and the exhaust gas flow rate Qe, a pressure-regulating opening setting unit 55 for setting a pressure-regulating opening Dp for the exhaust choke valve 8 on the basis of the actual boost pressure P, the pressure difference ΔP and the temperature-regulating opening Dt, and the opening determining unit 59 that determines an opening for the exhaust choke valve 8 on the basis of the pressure difference ΔP and the actual operating position S.

The temperature-regulating opening setting unit 51 and the pressure-regulating opening setting unit 55 form an exhaust choke valve opening setting means for the exhaust choke valve opening control unit 43. The temperature-regulating opening Dt is regulated to adjust the temperature of the catalytic converter 7 to the target temperature To. The pressure-regulating opening Dp is regulated to adjust the boost pressure to the target boost pressure Po.

When the opening of the exhaust choke valve 8 is reduced, the kinetic energy of the exhaust gas diminishes, the back pressure acting on the catalytic converter 7, namely, the pressure of the exhaust gas on the downstream side of the catalytic converter 7 in the exhaust passage 6, increases, whereby the temperature of the exhaust gas on the upstream side of the exhaust choke valve 8 in the exhaust passage 6 rises to promote heating of the catalytic converter 7 by the exhaust gas.

When the opening of the exhaust choke valve 8 is increased, the kinetic energy of the exhaust gas increases, the back pressure acting on the catalytic converter 7 decreases and the temperature of the exhaust gas on the upstream side of the exhaust choke valve 8 diminishes to suppress the heating of the catalytic converter 7 by the exhaust gas or to lower the temperature of the catalytic converter 7. When the opening of the exhaust choke valve 8 is increased, the back pressure acting on the turbine 12, namely, the pressure of the exhaust gas on the downstream side of the turbine 12, diminishes and the velocity of the exhaust gas flowing into the turbine 12 increases. Consequently, the rotational speed of the turbine 12 increases, and the rotational speed of the compressor 11 rotated by the turbine 12 increases to increase the boost pressure.

The temperature-regulating opening setting unit 51 includes a temperature change calculator 52 which calculates a temperature change Tc by which the temperature of the catalytic converter 7. is to be changed, based on the actual temperature T, the temperature difference AT and the exhaust gas flow rate Qe, and a temperature-regulating opening calculator 53 which calculates a temperature-regulating opening Dt for the exhaust choke valve 8, based on the temperature change Tc.

Referring to Figs. 2, 3, 4 and 7, the temperature change calculator 52 calculates a temperature difference AT equal to the absolute value of the difference between the actual temperature T of the catalytic converter 7 and the target temperature To, and scans the maps M_{L} (Fig. 3) and M_{H} (Fig. 4), which are three-dimensional maps as functions of the temperature difference AT with the exhaust gas flow rate Qe as parameter, to retrieve a temperature change Tc corresponding to the temperature difference AT and the exhaust gas flow rate Qe. The temperature change Tc is a temperature increment Tu (Fig. 3) for raising the temperature of the catalytic converter 7 or a temperature decrement Td (Fig. 4) for lowering the temperature of the catalytic converter 7.

More concretely, as shown in the temperature increment map M_{L} shown in Fig. 3, which is scanned when the actual temperature T is not higher than the target temperature To, temperature increment Tu, namely, a temperature change Tc, is equal to a maximum value Tum when the temperature difference ΔT is not below a predetermined temperature difference ΔT_{L} on the low-temperature side and decreases continuously as the temperature difference ΔT decreases when the temperature difference ΔT below the predetermined temperature difference ΔT_{L}.

As shown in the temperature increment map M_{H} shown in Fig. 4, which is scanned when the actual temperature T is higher than the desired temperature To, temperature decrement Td, namely, a temperature change Tc, is equal to a maximum value Tdm when the temperature difference AT is not below a predetermined temperature difference ΔT_{H} on the high-temperature side and decreases continuously as the temperature difference AT decreases when the temperature difference AT is below the predetermined value ΔT_{H}.

The predetermined values ΔT_{L} and ΔT_{H} are properly determined through experiments such that the actual temperature may not overshoot the desired temperature To when the actual temperature is increased toward the desired temperature To and when the actual temperature is decreased toward the desired temperature To.

Heat is transferred from the exhaust gas to the catalytic converter 7 (Fig. 1) at an increased transfer rate when the flow rate of the exhaust gas is increased. Therefore, the predetermined temperature differences ΔT_{L} and ΔT_{H} are increased according to the exhaust gas flow rate Qe as the exhaust gas flow rate Qe changes along the broken lines indicating exhaust gas flow rates Qe₁ and Qe₂ as shown in Figs. 3 and 4.

In Figs. 3 and 4, continuous lines indicate the relation between the temperature difference AT and the temperature increment Tu and the relation between the temperature difference ΔT and the temperature decrement Td, respectively, when the exhaust gas flow rate Qe is lower than the exhaust gas flow rates Qe₁ and Qe₂. The exhaust gas flow rate Qe₂ is higher than the exhaust gas flow rate Qe₁.

The predetermined temperature differences ΔT_{L} and ΔT_{H} are thus increased as the exhaust gas flow rate Qe increases. Therefore, the temperature change Tc starts decreasing while the temperature difference ΔT is comparatively large when the exhaust gas flow rate Qe increases. Consequently, the actual temperature T can be more effectively restrained from overshooting the desired temperature To.

Referring to Fig. 5, the temperature-regulating opening calculator 53 scans a percentage opening area map Mᵥ, namely, a two-dimensional map showing a percentage opening area α of the exhaust choke valve 8 as a function of temperature change Tc calculated by the temperature change calculator 52, to retrieve a percentage opening area α corresponding to a temperature change Tc and calculates a temperature-regulating opening Dt for the exhaust choke valve 8 (Fig. 1) corresponding to the percentage opening area α. As obvious from the map Mv, percentage opening area α increases (or decreases) continuously when the temperature increment Tu decreases (or increases) and when the temperature decrement Td increases (or decreases).

The percentage opening area α is the ratio of an open area of the exhaust choke valve 8 at an opening to a maximum open area of the exhaust choke valve 8 at a maximum opening. The percentage opening area α varies continuously between a minimum percentage opening area for a minimum opening and a maximum percentage opening area for a maximum opening. The minimum opening is an opening necessary for ensuring the discharge of the exhaust gas that enables the internal combustion engine E to operate.

When the temperature of the catalytic converter 7 is increased to the desired temperature To by thus regulating the relation between the temperature difference AT and the temperature change Tc such that the temperature difference ΔT becomes smaller than a predetermined temperature difference ΔT_{L}, the temperature increment Tu decreases continuously and the temperature-regulating opening Dt of the exhaust choke valve 8 increases continuously. Consequently, the temperature of the catalytic converter 7 can be effectively restrained from overshooting the target temperature To when the temperature of the catalytic converter 7 is increased. When the temperature of the catalytic converter 7 is decreased to the target temperature To such that the temperature difference between the target temperature To and the actual temperature T is reduced to a value below the predetermined temperature difference ΔT_{H}, the temperature decrement Td is decreased continuously while the temperature-regulating opening Dt of the exhaust choke valve 8 is also decreased continuously. Therefore, the temperature of the catalytic converter 7 can be effectively restrained from overshooting the target temperature To when the temperature-regulating opening Dt of the exhaust choke valve 8 increased with decrease in temperature.

Referring to Fig. 2, the pressure-regulating opening setting unit 55 includes an opening increment calculator 56 which calculates an opening increment ΔD for increasing the temperature-regulating opening Dt of the exhaust choke valve 8, based on the boost pressure difference ΔP and the temperature-regulating opening Dt, and a pressure-regulating opening calculator 57 for calculating a pressure-regulating opening Dp for the exhaust choke valve 8 based on the opening increment ΔD.

Referring to Figs. 6 and 8, the opening increment calculator 56 scans an opening increment map Mp (Fig. 6), namely, a three-dimensional map of a function of the pressure difference ΔP with the temperature-regulating opening Dt as a parameter, to retrieve an opening increment ΔD corresponding to the pressure difference ΔP and the temperature-regulating opening Dt. The pressure-regulating opening calculator 57 obtains a pressure-regulating opening Dp by adding the opening increment AD to the temperature-regulating opening Dt.

As shown in the opening increment map Mp, the temperature-regulating opening ΔD decreases continuously as the pressure difference ΔP decreases, and decreases to zero upon the coincidence of the pressure difference ΔP with an allowable pressure difference ΔPo. It is desirable to increase the temperature of the catalytic converter 7 as rapidly as possible to the target temperature To to augment the purifying ability of the catalytic converter 7 when the temperature of the catalytic converter 7 is far lower than the target temperature To. Therefore, the opening increment ΔD is changed according to the temperature-regulating opening Dt so that the opening increment ΔD is smaller for a smaller temperature-regulating opening Dt relative to the same pressure difference ΔP as shown by broken lines indicating the variation of temperature-regulating openings Dt₁ and Dt₂ in Fig. 6.

In Fig. 6, a continuous line indicates the relation between the pressure difference ΔP and the opening increment ΔD for a temperature-regulating opening Dt smaller than the temperature-regulating openings Dt₁ and Dt₂. The temperature-regulating opening Dt₁ is smaller than the temperature-regulating opening Dt₂.

In this embodiment, the pressure-regulating opening Dp is smaller than a reference opening Dc (Fig. 5) of the exhaust choke valve 8 when the actual temperature T is equal to the target temperature To.

When the opening of the exhaust choke valve 8 is increased from the temperature-regulating opening Dt by the opening increment ΔD, the pressure of the exhaust gas on the upstream side of the exhaust choke valve 8 in the exhaust passage 6 decreases and the pressure of the exhaust gas on the downstream side of the turbine 12 decreases. Consequently, the boost pressure increases because the velocity of the exhaust gas passing the variable vanes 13 increases and the rotational speed of the turbine 12 increases.

Referring to Figs. 2 and 8, the opening determining unit 59 selects either of the temperature-regulating opening Dt and the pressure-regulating opening Dp as a set opening D, and gives a control signal indicating the set opening D to the actuator 23 to set the exhaust choke valve 8 for the set opening D.

More concretely, the opening determining unit 59 selects the temperature-regulating opening Dt when the actual operating position S of the variable vane 13 is not equal to a minimum vane position and when the actual boost pressure P is higher than the target boost pressure Po. The opening determining unit 59 selects the pressure-regulating opening Dp when the pressure difference ΔP is greater than the permissible pressure difference ΔPo and the actual operating position S is equal to the minimum vane position.

The supercharger controller C2 and the exhaust choke valve controller C3 will be described with reference to Figs. 2 and 7 to 9.

A temperature-regulating opening calculating procedure for calculating the temperature-regulating opening Dt and functions of the temperature-regulating opening setting unit 51 will be described with reference to Figs. 2 and 7.

In step S1, after the internal combustion engine E has been started, the temperature sensor 35 measures an actual temperature T of the catalytic converter 7 (Fig. 1) and the exhaust gas flow sensor 36 measures the flow rate Qe of the exhaust gas. In step S2, the actual temperature T is compared with the target temperature To of the catalytic converter 7. If the actual temperature T is not higher than the target temperature To, i.e., if the response to a query made in step S2 is affirmative, the procedure proceeds to step S4 in which the temperature difference ΔT, namely, the absolute value of the difference between the target temperature To and the actual temperature T, is calculated.

Subsequently, a temperature increment Tu corresponding to the temperature difference ΔT and the exhaust gas flow rate Qe is retrieved from the map M_{L} (Fig. 3) in step S4.

Then, a percentage opening area α (Fig. 5) of the exhaust choke valve 8 to achieve the temperature increment Tu, namely, the temperature change Tc is retrieved from the map Mᵥ (Fig. 5), and a temperature-regulating opening Dt for the exhaust choke valve 8 corresponding to the percentage opening area α is calculated in step S5.

If the actual temperature T is higher than the target temperature To, i.e., if the response to the query made in step S2 is negative, a temperature difference ΔT, namely, the absolute value of the difference between the target temperature To and the actual temperature T, is calculated in step S6. In step S7, a temperature decrement Td corresponding to the temperature difference ΔT and the exhaust gas flow rate Qe is retrieved from the map M_{H} (Fig. 4).

Then, the procedure proceeds to step S5 in which a percentage opening area α of the exhaust choke valve 8 to achieve the temperature decrement Td is retrieved from the map Mᵥ (Fig. 5) and a temperature-regulating opening Dt for the exhaust choke valve 8 corresponding to the percentage opening area α is calculated.

Functions of the ECU 21 relating to the operations in steps S3, S4, S6 and S7 are carried out by the temperature change calculator 52, and the functions of the ECU 21 relating to the operation in step s5 is carried out by the temperature-regulating opening calculator 53.

With reference to Figs. 2 and 8 will be described a control procedure to be executed by the supercharger controller C2 and the exhaust choke valve controller C3 to control the variable vanes 13 and the exhaust choke valve 8, together with functions of the supercharger controller C2 and the exhaust choke valve controller C3.

After the internal combustion engine E has been started, an actual boost pressure P is measured by the boost pressure sensor 33, a temperature-regulating opening Dt is calculated by the temperature-regulating setting unit 51, and
a target boost pressure Po indicating the condition of the engine E is calculated by the target boost pressure calculator 45. The actual boost pressure P, the temperature-regulating opening Dt and the target boost pressure Po are read in step S11. Then, in step S12, the actual boost pressure P is compared with the target boost pressure PI. If the actual boost pressure P is not higher than the target boost pressure Po, a pressure difference ΔP equal to the absolute vale of the difference between the actual boost pressure P and the target boost pressure Po is calculated in step S13.

Then, in step S14, the pressure difference ΔP is compared with the permissible pressure difference ΔPo to see if the pressure difference ΔP is not greater than the permissible pressure difference ΔPo. If the pressure difference ΔP is not greater than the permissible pressure difference ΔPo, the procedure proceeds to step 15 in which the supercharger controller C2 adjusts the operating position of the variable vanes 13 to control the boost pressure. The rotational speed of the compressor 11 driven by the turbine 12 is controlled by thus executing the supercharger boost pressure control operation such that the boost pressure is adjusted to the target boost pressure Po, and the exhaust choke valve controller C3 adjust the opening of the exhaust choke valve 8 to the temperature-regulating opening Dt.

When the temperature-regulating opening Dt of the exhaust choke valve 8 is adjusted to the reference opening Dc, i.e., when the percentage opening area is adjusted to a reference percentage opening area ratio αc (Fig. 5), the catalytic converter 7 is maintained at the target temperature To (Fig. 9). When the opening of the exhaust choke valve 8 is reduced below the reference opening Dc (the reference percentage opening area ratio αc) to reduce the percentage opening area ratio α, the back pressure acting on the catalytic converter 7 rises so that the temperature of the exhaust gas rises. Consequently, the temperature of the catalytic converter 7 rises. When the opening of the exhaust choke valve 8 is increased beyond the reference opening Dc (the reference percentage opening area ratio αc) to increase the percentage opening area ratio α, the back pressure acting on the catalytic converter 7 falls so that the temperature of the exhaust gas drops. Consequently, the temperature of the catalytic converter 7 drops and the pumping loss of the engine is reduced.

During a process of increasing the actual temperature T of the catalytic converter 7 below the target temperature To as shown in Fig. 9 by controlling the temperature of the catalytic converter 7 by the exhaust choke valve controller C3, the temperature-regulating opening Dt of the exhaust choke valve 8 is held at the minimum opening (Fig. 5) to raise the temperature of the catalytic converter 7 rapidly, when the temperature difference ΔT is large, so that the temperature of the catalytic converter 7 reaches the activation temperature Ta and the target temperature To in a short time. As the temperature difference ΔT decreases, the temperature-regulating opening Dt of the exhaust choke valve 8 is increased continuously to restrain the temperature of the catalytic converter 7 from overshooting the target temperature To. During a target temperature maintaining process after the increase of the temperature of the catalytic converter 7 to the target temperature To, temperature rise beyond the target temperature To and temperature fall below the target temperature To are suppressed.

If the pressure difference ΔP is greater than the permissible pressure difference ΔPo, i.e., if the response to the query made in step S14 is negative, a query is made in step S16 to see whether or not the actual operating position of the variable vanes 13 measured by the vane position sensor 34 is equal to the minimum vane position. If the response to the query made in step S16 is negative, i.e., if the actual operating position of the vanes 13 is not equal to the minimum vane position, the boost pressure can be increased by adjusting the operating position of the variable vanes 13. Therefore, the procedure proceeds to step 15 in which the boost pressure of the supercharger is controlled and the temperature-regulating opening Dt of the exhaust choke valve 8 is controlled irrelevantly to the operating position of the variable vanes 13 and the boost pressure.

If the response to the query made in step S16 is affirmative, i.e., if the actual operating position of the vanes 13 is equal to the minimum vane position, the boost pressure cannot be increased by adjusting the operating position of the variable vanes 13. Therefore, the opening of the exhaust choke valve 8 is controlled with the intention of increasing the boost pressure. In step S17, an opening increment ΔD corresponding to the pressure difference ΔP and the temperature-regulating pressure difference ΔP is retrieved from the map M_{P} (Fig. 6)

In step S18, the opening increment ΔD is added to the temperature-regulating opening Dt to provide a pressure-regulating opening Dp. In step S19, the exhaust choke valve controller C3 adjust the opening of the exhaust choke valve 8 to the pressure-regulating opening Dp larger than the temperature-regulating opening Dt by the opening increment ΔD with the variable vanes 13 retained at the minimum vane position by the supercharger controller C2, to achieve boost pressure control through the adjustment of the opening of the exhaust choke valve 8. Consequently, the back pressure acting on the turbine 12 decreases, the rotational speed of the turbine 12 increases, the rotational speed of the compressor 11 increases and the boost pressure increases toward the target boost pressure Po.

If it is decided in step S12 that the actual boost pressure P is higher than the target boost pressure Po, the control procedure goes to step S15 to control the boost pressure of the supercharger by adjusting the operating position of the variable vanes 13. The temperature of the catalytic converter 7 is controlled through the control of the temperature-regulating opening Dt for the exhaust choke valve 8.

Thus, the functions of the ECU 21 executed in steps S12 to S14, S16 and S15 for controlling the variable vanes 13 to control the boost pressure and the functions of the ECU 21 executed in step S19 for controlling the variable vanes 13 are those of the supercharging control unit 42.

Functions of the ECU 21 executed in step S17 are those of the opening increment calculator 56. Functions of the ECU 21 executed in step S18 are those of the pressure-regulating opening calculator 57. Functions of the ECU 21 executed in steps S14, S16 and S15 for controlling the exhaust choke valve 8 and functions of the ECU 21 executed in step S19 for controlling the exhaust choke valve 8 are those of the opening determining unit 59.

Operations and effects of the internal combustion engine E in the above-described preferred embodiment will be described.

In the internal combustion engine E provided with the exhaust turbocharger 10, the catalytic converter 7, namely, the exhaust emission control device, and the exhaust choke valve 8, the supercharger controller C2 controls the operating position of the variable vanes 13 on the basis of the pressure difference ΔP between the target boost pressure Po and the actual boost pressure P. The exhaust choke valve controller C3 is provided with the temperature-regulating opening setting unit 51 which determines the temperature-regulating opening Dt for the exhaust choke valve 8 on the basis of the temperature difference AT between the target temperature To at which the catalytic converter 7 is activated and the actual temperature T of the catalytic converter 7. The exhaust choke valve controller C3 adjusts the opening of the exhaust choke valve 8 to the temperature-regulating opening Dt smaller than the reference opening Dc to raise the temperature of the catalytic converter 7, when the actual temperature T is lower than the target temperature To and the position of the variable vanes 13 is other than a minimum vane position, namely, a critical vane position. Thus, the heating of the catalytic converter 7 at a temperature below the target temperature To is promoted to heat the catalytic converter 7 rapidly to the target temperature To by adjusting the opening of the exhaust choke valve 8 to the temperature-regulating opening Dt smaller than the reference opening Dc. Thus, the exhaust emission purifying ability of the catalytic converter 7 is enhanced. Since the boost pressure can be increased by operating the variable vane 13 because the variable vanes 13 are not at the minimum vane position, the boost pressure can be adjusted to the target boost pressure Po by operating the variable vanes 13 to improve the operating performance of the internal combustion engine E.

When the actual temperature T is lower than the target temperature To, the actual boost pressure P is lower than the target boost pressure Po, the pressure difference ΔP is greater than the permissible pressure difference ΔPo and the actual vane position S of the variable vanes 13 measured by the vane position sensor 34 is equal to the minimum vane position, the exhaust choke valve controller C3 adjusts the opening of the exhaust choke valve 8 to the pressure-regulating opening Dp greater than the temperature-regulating opening Dt. Thus, the boost pressure can be increased toward the target boost pressure Po to improve the operating performance of the internal combustion engine E by increasing the kinetic energy of the exhaust gas when the boost pressure cannot be increased by controlling the variable vanes 13 because the variable vanes 13 of the supercharger 10 are at the critical vane position even though the actual boost pressure P is lower than the target boost pressure Po by a difference greater than the permissible pressure difference ΔPo.

The exhaust choke valve controller C3 is provided with the pressure-regulating opening setting unit 55. The pressure-regulating opening setting unit 55 determines the pressure-regulating opening Dp by adding the opening increment ΔD calculated on the basis of the pressure difference ΔP to the temperature-regulating opening Dt. The opening increment Dt is smaller when the temperature-regulating opening Dt is smaller for the same pressure difference ΔP. Since the opening increment ΔD added to the temperature-regulating opening Dt is smaller when the temperature-regulating opening Dt is smaller, the degree of suppressing heating is smaller when the degree of necessity for heating the exhaust emission control device is smaller. Thus, satisfactory operating performance can be ensured by increasing the boost pressure and, at the same time, the temperature of the exhaust emission control device can be rapidly increased to the target temperature Po.

Since the exhaust choke valve controller C3 adjusts the opening of the exhaust choke valve 8 to the temperature-regulating opening Dt to give preference to heating the catalytic converter 7 when the actual boost pressure P increases beyond the target boost pressure Po, the exhaust emission control device can be still more rapidly heated to the target temperature To

When the actual boost pressure P is lower than the target boost pressure Po, the pressure difference ΔP is greater than the permissible pressure difference ΔPo and the variable vanes 13 are not at the minimum vane position, the supercharger controller C3 controls the variable vanes 13 according to the pressure difference ΔP, and the exhaust choke valve controller C3 adjusts the opening of the exhaust choke valve 8 to the temperature-regulating opening Dt. Thus, the boost pressure is increased toward the target boost pressure Po by controlling the variable vanes 13 when the variable vanes 13 are not at the minimum vane position even when the actual boost pressure P is lower than the target boost pressure Po, whereby satisfactory operating performance is ensured. The temperature of the catalytic converter 7 can be rapidly increased to the target temperature To by adjusting the opening of the exhaust choke valve 8 to the temperature-regulating opening Dt.

The temperature-regulating opening setting unit 51 determines the temperature-regulating opening Dt on the basis of the temperature difference ΔT and the exhaust gas flow rate Qe measured by the exhaust gas flow sensor 36. Thus, the temperature-regulating opening Dt of the exhaust choke valve 8 is controlled on the basis of exhaust gas flow rate Qe measured by the exhaust gas flow rate sensor 36 in addition to temperature difference AT between the target temperature To and the actual temperature T measured by the temperature sensor 35. Therefore, the temperature of the catalytic converter 7 can be rapidly increased to the target temperature To, the temperature of the catalytic converter 7 can be restrained from overshooting the target temperature To and the catalytic converter 7 can be stably maintained at the target temperature To. Consequently, exhaust emission purifying performance can be improved, and the excessive heating of the catalytic converter can be avoided to improve the durability of the catalytic converter 7.

Modifications of the internal combustion engine E in the preferred embodiment will be described mainly in terms of changes made to provide the modifications.

The pressure-regulating opening Dp of the exhaust choke valve 8 may be smaller than the reference opening De. When the pressure-regulating opening Dp is smaller than the reference opening De, the deterioration of the effect of promoting heating the catalytic converter 7 through the control of the opening of the exhaust choke valve 8 can be suppressed. Consequently, satisfactory operating performance can be ensured by increasing the boost pressure and, at the same time, the temperature of the catalytic converter 7 can be rapidly raised to the target temperature To.

The boost control members may be replaced with a flow control valve, such as a bypass valve, capable of controlling the flow rate of the exhaust gas flowing into the turbine 12, a relief valve capable of discharging the intake air pressurized by the compressor 11 or an auxiliary actuator, such as an electric motor, capable of rotationally driving the compressor 11.

The exhaust choke valve 8 is disposed on the downstream side of the catalytic converter 7, namely, the exhaust emission control device, in this embodiment. The exhaust choke valve 8 may be disposed on the upstream side of the catalytic converter 7 and on the downstream side of the turbine 12 in the exhaust passage 6. When the exhaust choke valve 8 is disposed on the upstream side of the catalytic converter 7 and the opening of the exhaust choke valve 8 is small, heat transfer rate at which heat is transferred from the exhaust gas to the catalytic converter 7 increases and the temperature rise of the catalytic converter 7 can be promoted by disposing the catalytic converter 7 such that the exhaust gas flowing at an increased velocity is obtained when the exhaust gas flowing through a gap between the exhaust passage 6 and the exhaust choke valve 8 flows through the catalytic converter 7.

The exhaust emission control device may be a NOₓ catalytic converter whose purifying performance is deteriorated by the adhesion of SOₓ (sulfur oxides) or a filter whose purifying performance is deteriorated by the adhesion of exhaust particles contained in the exhaust gas. When such an exhaust emission control device is employed, the target temperature To is equal to a regenerative temperature at which SOₓ adhering to the exhaust emission control device can be reduced or exhaust particles can be burnt to recover the purifying ability of the exhaust emission control device. The efficiency of a regenerative process for recovering the purifying ability can be improved by a temperature controller, excessive temperature rise can be prevented and the durability of the exhaust emission control device can be improved.

The exhaust emission control device may be a catalytic converter provided with an oxidation catalyst.

The internal combustion engine E may be a spark-ignition internal combustion engine. The exhaust emission control device may be a three-way catalytic converter.

The target temperature To may be equal to an activation temperature Ta.

An internal combustion engine is provided with an exhaust turbocharger 10, a catalytic converter 7 and an exhaust choke valve 8. The catalytic converter 7 is heated rapidly to a target temperature by controlling the opening of the exhaust choke valve 8, and a high boost pressure is ensured to improve the operating performance of the internal combustion engine. A supercharger controller C2 controls the vane position of variable vanes 13 included in the exhaust turbocharger 10 on the basis of pressure difference between a target boost pressure Po and an actual boost pressure P. A exhaust choke valve controller C3 includes a temperature-regulating opening setting unit 51 which sets a temperature-regulating opening Dt for the exhaust choke valve 8 on the basis of the temperature difference ΔT between the actual temperature T and a target temperature To at which the catalytic converter 7 is activated. The exhaust choke valve controller C3 adjusts the opening of the exhaust choke valve 8 to a temperature-regulating opening Dt greater than a reference opening for the exhaust choke valve 8 to raise the temperature of the catalytic converter 7 when the actual temperature T is lower than the target temperature To and the variable vanes 13 are not at a minimum vane position for increasing the boost pressure.

## Claims

1. An internal combustion engine comprising: an intake passage (3); an exhaust passage (6); a supercharger (10) including an intake air pressurizing means (11) for pressurizing intake air in the intake passage by using the kinetic energy of the exhaust gas flowing through the exhaust passage (6), and a boost control member (13) for controlling the boost pressure; a supercharger controller (C2) for controlling the boost control members (13); an exhaust emission control device (7) placed in the exhaust passage (6) to purify the exhaust gas; an exhaust choke valve (8) placed in the exhaust passage (6) to regulate the flow of the exhaust gas; an exhaust choke valve controller (C3) for controlling the opening of the exhaust choke valve (8); and an engine condition monitoring means (30) for monitoring engine condition; wherein
the engine condition monitoring means (30) includes a boost pressure measuring means (33) for measuring an actual boost pressure (P), a temperature measuring means (35) for measuring an actual temperature (T) of the exhaust emission control device (7), and an operating condition determining means (34) for determining an actual operating condition (S) of the boost control member (13);
the boost pressure controller (C2) is configured to control the operating condition of the boost control member (13) on the basis of an absolute value of a pressure difference (ΔP) between a target boost pressure (Po) calculated by a target boost pressure calculating means (45) and the actual boost pressure (P);
the exhaust choke valve controller (C3) includes a temperature-regulating opening setting means (51) for setting a temperature-regulating opening (Dt) for the exhaust choke valve (8) on the basis of an absolute value of a temperature difference (AT) between a target temperature (To) that activates or regenerates the exhaust emission control device (7) and the actual temperature (T); and
the exhaust choke valve controller (C3) is configured to adjust the opening of the exhaust choke valve (8) to the temperature-regulating opening (Dt) smaller than a reference opening (Dc) at which the exhaust choke valve (8) is opened when the actual temperature (T) is equal to the target temperature (To) when the actual temperature (T) of the exhaust emission control device (7) is lower than the target temperature (To) and the actual operating condition (S) of the boost pressure control member (13) is not the same as a critical operating condition for raising the boost pressure,
**characterized in that** the exhaust choke valve controller (C3) is configured to increase the opening of the exhaust choke valve (8) to a pressure-regulating opening (Dp) larger than the temperature-regulating opening (Dt) when the actual temperature (T) is lower than the target temperature (To), the actual boost pressure (P) is lower than the target boost pressure (Po), the pressure difference (ΔP) is greater than a permissible pressure difference (ΔPo) and the actual operating condition (S) corresponds to the critical operating condition.

2. The internal combustion engine according to claim 1, wherein the pressure-regulating opening (Dp) is smaller than the reference opening (Dc).

3. The internal combustion engine according to claim 1 or 2, wherein the exhaust choke valve controller (C3) includes a pressure-regulating opening setting means (55) for setting the pressure-regulating opening (Dp) by adding an opening increment (ΔD) calculated on the basis of the pressure difference (ΔP) to the temperature-regulating opening (Dt), and the opening increment (ΔD) is smaller when the temperature-regulating opening (Dt) is smaller for the same pressure difference (ΔP).

4. The internal combustion engine according to any one of claims 1 to 3, wherein the exhaust choke valve controller (C3) is configured to adjust the opening of the exhaust choke valve (8) to the temperature-regulating opening (Dt) when the actual boost pressure (P) is higher than the target boost pressure (Po).

5. The internal combustion engine according to any one of claims 1 to 4, wherein the supercharger controller (C2) is configured to control the operating condition of the boost control members (13) according to the pressure difference (ΔP) and the exhaust choke valve controller (C3) is configured to adjust the opening of the exhaust choke valve (8) to the temperature-regulating opening (Dt) when the actual boost pressure (P) is lower than the target boost pressure (Po), the pressure difference (ΔP) is greater than the permissible pressure difference (ΔPo) and the boost pressure regulating member (13) is not in the critical operating condition.

6. The internal combustion engine according to any one of claims 1 to 5, wherein the temperature-regulating opening setting means (51) is configured to set the temperature-regulating opening (Dt) on the basis of the temperature difference (AT) and an exhaust gas flow rate (Qe) measured by an exhaust gas flow rate measuring means (36) for measuring the flow rate of the exhaust gas in the exhaust passage (6).

## Patentansprüche

1. Verbrennungsmotor, umfassend: einen Einlasskanal (3); einen Auslasskanal (6); einen Auflader (10), der ein Einlassluft-Druckbeaufschlagungsmittel (11) zum Unterdrucksetzen von Einlassluft in dem Einlasskanal unter Verwendung der kinetischen Energie des durch den Auslasskanal (6) fließenden Abgases sowie ein Ladesteuerelement (13) zum Steuern/Regeln des Ladedrucks enthält; einen Auflader-Controller (C2) zum Steuern/Regeln des Ladesteuerelements (13); eine Abgasemissionssteuervorrichtung (7), die in dem Auslasskanal (6) zum Reinigen des Abgases angeordnet ist; ein Auslassdrosselventil (8), das in dem Auslasskanal (6) angeordnet ist, um den Fluss des Abgases zu regulieren; einen Auslassdrosselventilcontroller (C3) zum Steuern/Regeln der Öffnung des Auslassdrosselventils (8); sowie ein Motorzustandüberwachungsmittel (30) zum Überwachen des Motorzustands; worin
das Motorzustandüberwachungsmittel (30) ein Ladedruckmessmittel (33) zum Messen eines aktuellen Ladedrucks (P), ein Temperaturmessmittel (35) zum Messen einer aktuellen Temperatur (T) der Abgasemissionssteuervorrichtung (7) sowie ein Betriebszustandbestimmungsmittel (34) zum Bestimmen eines aktuellen Betriebszustands (S) des Ladesteuerelements (13) enthält;
wobei der Ladedruckcontroller (C2) konfiguriert ist, um den Betriebszustand des Ladesteuerelements (13) auf der Basis eines Absolutwerts einer Druckdifferenz (ΔP) zwischen einem von einem Sollladedruckberechnungsmittel (45) berechneten Sollladedruck (Po) und dem aktuellen Ladedruck (P) zu steuern/zu regeln;
wobei der Auslassdrosselventilcontroller (C3) ein Temperaturregulierungsöffnungseinstellmittel (51) zum Einstellen einer Temperaturregulierungsöffnung (Dt) für das Auslassdrosselventil (8) auf der Basis eines Absolutwerts einer Temperaturdifferenz (ΔT) zwischen einer die Abgasemissionssteuervorrichtung (7) aktivierenden oder regenerierenden Solltemperatur (To) und der aktuellen Temperatur (T) enthält; und
der Auslassdrosselventilcontroller (C3) konfiguriert ist, um die Öffnung des Auslassdrosselventils (8) auf die Temperaturregulierungsöffnung (Dt) einzustellen, die kleiner ist als eine Referenzöffnung (Dc), bei der das Auslassdrosselventil (8) geöffnet wird, wenn die aktuelle Temperatur (T) gleich der Solltemperatur (To) ist, wenn die aktuelle Temperatur (T) der Abgasemissionssteuervorrichtung (7) niedriger ist als die Solltemperatur (To) und der aktuelle Betriebszustand (S) des Ladedrucksteuerelements (13) nicht der gleiche wie ein kritischer Betriebszustand zum Anheben des Ladedrucks ist,
**dadurch gekennzeichnet, dass** der Auslassdrosselventilcontroller (C3) konfiguriert ist, um die Öffnung des Auslassdrosselventils (8) auf eine Druckregulierungsöffnung (Dp) zu vergrößern, die größer ist als die Temperaturregulierungsöffnung (Dt), wenn die aktuelle Temperatur (T) niedriger als die Solltemperatur (To) ist, der aktuelle Ladedruck (P) niedriger als der Sollladedruck (Po) ist, die Druckdifferenz (ΔP) größer als eine zulässige Druckdifferenz (ΔPo) ist und der aktuelle Betriebszustand (S) dem kritischen Betriebszustand entspricht.

2. Der Verbrennungsmotor nach Anspruch 1, worin die Druckregulierungsöffnung (Dp) kleiner als die Referenzöffnung (Dc) ist.

3. Der Verbrennungsmotor nach Anspruch 1 oder 2, worin der Auslassdrosselventilcontroller (C3) ein Druckregulierungsöffnungseinstellmittel (55) enthält, um die Druckregulierungsöffnung (Dp) durch Addieren einer auf der Basis der Druckdifferenz (ΔP) berechneten Öffnungszunahme (ΔD) zu der Temperaturregulierungsöffnung (Dt) einzustellen, und wobei, für die gleiche Druckdifferenz (ΔP), die Öffnungszunahme (ΔD) kleiner ist, wenn die Temperaturregulierungsöffnung (Dt) kleiner ist.

4. Der Verbrennungsmotor nach einem der Ansprüche 1 bis 3, worin der Auslassdrosselventilcontroller (C3) konfiguriert ist, um die Öffnung des Auslassdrosselventils (8) auf die Temperaturregulierungsöffnung (Dt) einzustellen, wenn der aktuelle Ladedruck (P) höher als der Sollladedruck (Po) ist.

5. Der Verbrennungsmotor nach einem der Ansprüche 1 bis 4, worin der Auflader-Controller (C2) konfiguriert ist, um den Betriebszustand des Ladesteuerelements (13) gemäß der Druckdifferenz (ΔP) zu steuern/zu regeln, und der Auslassdrosselventilcontroller (C3) konfiguriert ist, um die Öffnung des Auslassdrosselventils (8) auf die Temperaturregulierungsöffnung (Dt) einzustellen, wenn der aktuelle Ladedruck (P) niedriger als der Sollladedruck (Po) ist, die Druckdifferenz (ΔP) größer als die zulässige Druckdifferenz (ΔPo) ist, und das Ladedruckregulierungselement (13) nicht in dem kritischen Betriebszustand ist.

6. Der Verbrennungsmotor nach einem der Ansprüche 1 bis 5, worin das Temperaturregulierungsöffnungseinstellmittel (51) konfiguriert ist, um die Temperaturregulierungsöffnung (Dt) auf der Basis der Temperaturdifferenz (ΔT) und einer Abgasströmungsrate (Qe), die von einem Abgasströmungsratenmessmittel (36) zum Messen der Strömungsrate des Abgases in dem Auslasskanal (6) gemessen wird, einzustellen.

## Revendications

1. Moteur à combustion interne comprenant : un passage d'admission (3) ; un passage d'échappement (6) ; un compresseur à suralimentation (10) comprenant des moyens de mise sous pression d'air d'admission (11) pour mettre sous pression l'air d'admission dans le passage d'admission en utilisant l'énergie cinétique des gaz d'échappement s'écoulant à travers le passage d'échappement (6), et un élément formant limiteur de suralimentation (13) pour contrôler la pression de suralimentation ; un contrôleur de compresseur à suralimentation (C2) pour contrôler les éléments formant limiteur de suralimentation (13) ; un dispositif de commande d'émission d'échappement (7) placé dans le passage d'échappement (6) pour purifier les gaz d'échappement ; un étrangleur d'échappement (8) placé dans le passage d'échappement (6) pour réguler l'écoulement des gaz d'échappement ; un contrôleur d'étrangleur d'échappement (C3) pour contrôler l'ouverture de l'étrangleur d'échappement (8) ; et des moyens de surveillance de condition de moteur (30) pour surveiller la condition du moteur ; dans lequel :
les moyens de surveillance de condition de moteur (30) comprennent des moyens de mesure de pression de suralimentation (33) pour mesurer une pression de suralimentation réelle (P), des moyens de mesure de température (35) pour mesurer une température réelle (T) du dispositif de commande d'émission d'échappement (7) et des moyens de détermination de condition de fonctionnement (34) pour déterminer une condition de fonctionnement réelle (S) de l'élément formant limiteur de suralimentation (13) ;
le contrôleur de pression de suralimentation (C2) est configuré pour contrôler la condition de fonctionnement de l'élément formant limiteur de suralimentation (13) en fonction d'une valeur absolue d'une différence de pression (ΔP) entre une pression de suralimentation cible (Po) calculée par des moyens de calcul de pression de suralimentation cible (45) et la pression de suralimentation réelle (P) ;
le contrôleur d'étrangleur d'échappement (C3) comprend des moyens de réglage d'ouverture de régulation de température (51) pour régler une ouverture de régulation de température (Dt) pour l'étrangleur d'échappement (8) en fonction d'une valeur absolue d'une différence de température (ΔT) entre une température cible (To) qui active ou régénère le dispositif de commande d'émission d'échappement (7) et la température réelle (T) ; et
le contrôleur d'étrangleur d'échappement (C3) est configuré pour ajuster l'ouverture de l'étrangleur d'échappement (8) par rapport à l'ouverture de régulation de température (Dt) inférieure à une ouverture de référence (Dc) à laquelle l'étrangleur d'échappement (8) s'ouvre lorsque la température réelle (T) est égale à la température cible (To), lorsque la température réelle (T) du dispositif de commande d'émission d'échappement (7) est inférieure à la température cible (To) et que la condition de fonctionnement réelle (S) de l'élément de commande de pression de suralimentation (13) n'est pas la même que la condition de fonctionnement critique pour augmenter la pression de suralimentation ,
**caractérisé en ce que** le contrôleur d'étrangleur d'échappement (C3) est configuré pour augmenter l'ouverture de l'étrangleur d'échappement (8) jusqu'à une ouverture de régulation de pression (Dp) supérieure à l'ouverture de régulation de température (Dt) lorsque la température réelle (T) est inférieure à la température cible (To), la pression de suralimentation réelle (P) est inférieure à la pression de suralimentation cible (Po), la différence de pression (ΔP) est supérieure à une différence de pression admissible (ΔPo) et la condition de fonctionnement réelle (S) correspond à la condition de fonctionnement critique.

2. Moteur à combustion interne selon la revendication 1, dans lequel l'ouverture de régulation de pression (Dp) est inférieure à l'ouverture de référence (Dc).

3. Moteur à combustion interne selon la revendication 1 ou 2, dans lequel le contrôleur d'étrangleur d'échappement (C3) comprend des moyens de réglage d'ouverture de régulation de pression (55) pour régler l'ouverture de régulation de pression (Dp) en ajoutant un incrément d'ouverture (ΔD) calculé en fonction de la différence de pression (ΔP) à l'ouverture de régulation de température (Dt) et l'incrément d'ouverture (ΔD) est plus petit lorsque l'ouverture de régulation de température (Dt) est plus petite pour la même différence de pression (ΔP).

4. Moteur à combustion interne selon l'une quelconque des revendications 1 à 3, dans lequel le contrôleur d'étrangleur d'échappement (C3) est configuré pour ajuster l'ouverture de l'étrangleur d'échappement (8) par rapport à l'ouverture de régulation de température (Dt) lorsque la pression de suralimentation réelle (P) est supérieure à la pression de suralimentation cible (Po).

5. Moteur à combustion interne selon l'une quelconque des revendications 1 à 4, dans lequel le contrôleur de compresseur à suralimentation (C2) est configuré pour contrôler la condition de fonctionnement des éléments formant limiteur de suralimentation (13) selon la différence de pression (ΔP) et le contrôleur d'étrangleur d'échappement (C3) est configuré pour ajuster l'ouverture de l'étrangleur d'échappement (8) par rapport à l'ouverture de régulation de température (Dt) lorsque la pression de suralimentation réelle (P) est inférieure à la pression de suralimentation cible (Po), la différence de pression (ΔP) est supérieure à la différence de pression admissible (ΔPo) et l'élément de régulation de pression de suralimentation (13) n'est pas dans la condition de fonctionnement critique.

6. Moteur à combustion interne selon l'une quelconque des revendications 1 à 5, dans lequel les moyens de réglage d'ouverture de régulation de température (51) sont configurés pour régler l'ouverture de régulation de température (Dt) en fonction de la différence de température (ΔT) et un débit de gaz d'échappement (Qe) mesuré par des moyens de mesure de débit de gaz d'échappement (36) pour mesurer le débit des gaz d'échappement dans le passage d'échappement (6).
